# EUROPÄISCHE PATENTSCHRIFT

(11) **EP 4 049 985 B1**
(45) Veröffentlichungstag und Bekanntmachung des Hinweises auf die Patenterteilung: **01.04.2026**
(21) Anmeldenummer: 22158422.0
(22) Anmeldetag: 24.02.2022
(51) Int. Cl.: C04B 18/02, C04B 20/10, C04B 26/26

(54) **FÜLLSTOFF FÜR WANDBESCHICHTUNGEN**
FILLER FOR WALL COATINGS
AGENT DE REMPLISSAGE POUR REVÊTEMENTS MURAUX

(30) Priorität: 24.02.2021 EP 21158930
(43) Veröffentlichungstag der Anmeldung: 31.08.2022
(73) Patentinhaber: Amberger Kaolinwerke Eduard Kick GmbH & Co. KG, 92242 Hirschau (DE)
(72) Erfinder: Angela, Hullin, 91052 Erlangen (DE); Hans-Jürgen, Hofmann, 92546 Rottendorf (DE); Christian, Kohl, 92224 Amberg (DE)
(74) Vertreter: dompatent

(56) Entgegenhaltungen:
- EP-A1- 3 164 554
- US-A1- 2013 045 384

## Beschreibung

Die vorliegende Erfindung betrifft einen Füllstoff für Wandbeschichtungszusammensetzungen, ein Verfahren zur Herstellung des Füllstoffs für Wandbeschichtungszusammensetzungen, Wandbeschichtungszusammensetzungen umfassend den Füllstoff und ein Verfahren zur Herstellung einer Wandbeschichtungszusammensetzung.

Zur Erhöhung des Weißgrades und der Opazität bzw. Deckkraft werden in Wandbeschichtungszusammensetzungen oder Wandfarben in vielen Fällen kalzinierte Kaoline als Füllstoffe eingesetzt.

EP 1 715 009 A2 offenbart die Verwendung von kalziniertem Kaolin als Füllstoff zur Erhöhung des Weißgrades und der Opazität von weißen oder farbigen Oberflächenbeschichtungen.

WO 2013/025444 A2 offenbart einen Füllstoff für Wandbeschichtungszusammensetzungen, welcher einen kalzinierten Kaolinton und bevorzugt Flussmittel umfasst. Die Flussmittel werden dem Kaolinton zugegeben, um die Kalzinierungstemperatur abzusenken. Die erzeugten Füllstoffe haben einen positiven Einfluss auf die Nassabriebbeständigkeit von Wandbeschichtungen.

WO 2016/001303 A1 offenbart Partikel, die gebrannte Mischungen von Tonmineralen, kristallinen Kieselsäuren, Feldspat und optional sonstigen Zuschlagsstoffen sind und eine Partikelgröße (d50-Korngröße) im Bereich von 0,1 bis 3 mm aufweisen. Diese Partikel werden in Dachbeschichtungen verwendet.

US 2013/045384 beschreibt einen Kaolin-basierten Füllstoff. Hierzu wird Kaolin gebrannt, um einen Mullit-Index von wenigstens 25, bevorzugt 25 bis 62 zu erreichen. Es wird die Zugabe von Flussmitteln beschrieben.

Ein Nachteil beim Kalzinieren von Kaolin ist, dass dieses bei etwa 1380 °C erfolgt. Hierzu ist ein großer Energieaufwand nötig. Zudem weist kalziniertes Kaolin eine hohe Ölzahl auf. Je höher die Ölzahl eines Füllstoffs, desto mehr Bindemittel muss eine Wandbeschichtungszusammensetzung oder Wandfarbe enthalten. Ein höherer Bindemittelbedarf erhöht die Kosten und verringert den Gestaltungsspielraum bei der Zugabe weiterer Additive zu den Wandbeschichtungszusammensetzungen. Zudem kann eine höhere Ölzahl des Füllstoffs sich negativ auf die Nassabriebbeständigkeit der Wandbeschichtungen auswirken.

Es besteht somit Bedarf an weiteren Füllstoffen für Wandbeschichtungszusammensetzungen.

Es ist daher Aufgabe der vorliegenden Erfindung, einen Füllstoff für Wandbeschichtungszusammensetzungen, ein Verfahren zu dessen Herstellung, eine Wandbeschichtungszusammensetzung umfassend den Füllstoff, ein Verfahren zur Herstellung einer solchen Wandbeschichtungszusammensetzung sowie Verwendungen des Füllstoffs für Wandbeschichtungszusammensetzungen zur Verfügung zu stellen, welche zumindest einige der aus dem Stand der Technik bekannten Probleme überwinden.

Gelöst wird die erfindungsgemäße Aufgabe durch einen Füllstoff für Wandbeschichtungszusammensetzungen, wobei der Füllstoff aus Partikeln besteht, wobei die Partikel gebrannten Mischungen von
- 40 bis 70 Gew.-% Tonminerale
- 0 bis 32 Gew.-%, bevorzugt 5 bis 32 Gew.-% kristalline Kieselsäuren
- 10 bis 45 Gew.-% Feldspat
- 0 bis 20 Gew.-% sonstige Zuschlagstoffe
sind und wobei die Partikel eine d50-Korngröße zwischen 1 µm und 40 µm aufweisen.

Der Füllstoff für Wandbeschichtungszusammensetzungen besteht aus Partikeln mit einer definierten d50-Korngröße zwischen 1 µm und 40 µm. Bei den Partikeln handelt es sich um gebrannte Mischungen. Zur Herstellung der Partikel werden Mischungen der beschriebenen Zusammensetzung erstellt, welche durch Brennen versintert werden und anschließend auf eine definierte Korngröße vermahlen werden. Der Füllstoff kann in Form eines Pulvers vorliegen.

In einer bevorzugten Ausführungsform handelt es sich bei dem Füllstoff um Partikel, welche gebrannte Mischungen von
- 40 bis 70 Gew.-% Tonminerale
- 5 bis 30 Gew.-% kristalline Kieselsäuren
- 10 bis 30 Gew.-% Feldspat
- 0 bis 20 Gew.-% sonstige Zuschlagstoffe
sind und wobei die Partikel eine d50-Korngröße zwischen 1 µm und 40 µm aufweisen.

Der Zusatz von kristalliner Kieselsäure bewirkt vermutlich eine Erhöhung des Anteils an amorpher Phase durch Bildung eines Glases. Es scheint, dass der Zusatz kristalliner Kieselsäure dadurch insbesondere die Ölzahl der Partikel reduziert, im Vergleich zu Partikeln, die keine kristalline Kieselsäure enthalten.

Bevorzugt weisen die Partikel eine d50-Korngröße zwischen 3 µm und 40 µm, mehr bevorzugt zwischen 3 µm und 30 µm, noch mehr bevorzugt zwischen 3 µm und 25 µm, auf.

In einer weiteren erfindungsgemäßen Ausführungsform weisen die Partikel eine d50-Korngröße zwischen 4 µm und 15 µm auf.

d50-Korngröße bedeutet die Korngröße, bei der 50 Gew.-% der Partikel eine größere Korngröße aufweisen und 50 Gew.-% eine kleinere Korngröße aufweisen. Solche Korngrößenverteilungen können in einfacher Weise nach ISO 13320:2020-01 "Partikelgrößenanalyse - Partikelmessung durch Laserlichtbeugung" ermittelt werden. Der d50-Wert kann beispielsweise mit einem dieser Norm entsprechenden Lasergranulometer des Herstellers CILAS, Modell 1180 gemessen werden.

Bevorzugt werden die Tonminerale ausgewählt aus der Gruppe bestehend aus Kaolin, Dickit, Nacrit, Halloysit, Vermicullit und Mischungen davon. Auch weitere Minerale aus der Gruppe der Phyllosilikate sind geeignet.

Bevorzugt liegt die Menge der Tonminerale in der zu brennenden Mischung bei 45 Gew.-% oder mehr. Bevorzugt beträgt die Menge an Tonmineralen 65 Gew.-% oder weniger, mehr bevorzugt 60 Gew.-% oder weniger.

In einer bevorzugten Ausführungsform wird ein Tonmineral verwendet, welches über einen geringen Gesamtgehalt an Blei verfügt. Bevorzugt enthält das Tonmineral weniger als 300 ppmw, mehr bevorzugt weniger als 200 ppmw noch mehr bevorzugt weniger als 150 ppmw Blei, jeweils gemessen mittels Röntgenfluoreszenzanalyse nach DIN 51001:2003-08.

In einer weiteren bevorzugten Ausführungsform wird ein Tonmineral verwendet, das zudem einen geringen Gehalt an Eisen enthält, insbesondere weniger als 1 Gew.-% bezogen auf die Tonminerale, mehr bevorzugt weniger als 0,5 Gew.-% bezogen auf die Tonminerale. Gemessen wird der Eisengehalt mittels Röntgenfluoreszenzanalyse nach DIN 51001:2003-08 als Fe₂O₃.

Bevorzugt werden die kristallinen Kieselsäuren ausgewählt aus der Gruppe bestehend aus Quarz, Cristobalit, Tridymit und Mischungen davon. Zudem sind weitere Minerale der Quarzgruppe wie Coesit oder Opal geeignet. Die Verwendung von Quarz ist besonders bevorzugt. Bevorzugt liegt der Anteil von Quarz in den kristallinen Kieselsäuren bei mindestens 50 Gew.-%.

Bevorzugt beträgt die Menge an kristallinen Kieselsäuren 1 Gew.-% oder mehr, 5 Gew.-% oder mehr oder 9 Gew.-% oder mehr. Bevorzugt liegt die Menge an kristallinen Kieselsäuren bei 30 Gew.-% oder weniger, bei 25 Gew.-% oder weniger oder bei 18 Gew.-% oder weniger.

In einer bevorzugten Ausführungsform wird eine kristalline Kieselsäure verwendet, die über einen geringen Gesamtgehalt an Blei verfügt. Bevorzugt enthält die kristalline Kieselsäure weniger als 300 ppmw Blei, gemessen mittels Röntgenfluoreszenzanalyse nach DIN 51001:2003-08.

Bevorzugt beträgt die Menge an Feldspat 15 Gew.-% oder mehr, 20 Gew.-% oder mehr oder 25 Gew.-% oder mehr. Bevorzugt liegt die Menge an Feldspat bei 40 Gew.-% oder weniger, 30 Gew.-% oder weniger oder 28 Gew.-% oder weniger.

Bevorzugt verfügt der verwendete Feldspat über einen geringen Gesamtgehalt an Blei. Bevorzugt enthält der Feldspat weniger als 300 ppmw Blei, gemessen mittels Röntgenfluoreszenzanalyse nach DIN 51001:2003-08.

Bevorzugt sind die sonstigen Zuschlagstoffe ausgewählt aus der Gruppe bestehend aus Tonerde (Al₂O₃), Gerüstsilikaten, die keine Feldspäte sind, Schichtsilikaten, die keine Tonminerale sind, Silikaten, die keine Gerüst- oder Schichtsilikate sind, Carbonaten und Mischungen davon.

Bevorzugt beträgt die Menge an sonstigen Zuschlagsstoffen mindestens 1 Gew.-%. Bevorzugt beträgt die Menge an sonstigen Zuschlagsstoffen 10 Gew.-% oder weniger.

Bevorzugt enthalten die sonstigen Zuschlagsstoffe weniger als 300 ppmw Blei, gemessen mittels Röntgenfluoreszenzanalyse nach DIN 51001:2003-08.

Bevorzugt weist der erfindungsgemäße Füllstoff für Wandbeschichtungszusammensetzungen mindestens eine der folgenden Eigenschaften auf:
i) einen Bleigehalt von weniger als 300 ppmw, bevorzugt weniger als 200 ppmw, jeweils gemessen mittels Röntgenfluoreszenzanalyse nach DIN 51001:2003-08,
ii) einen amorphen Anteil von mehr als 10%, bevorzugt mehr als 12%, mehr bevorzugt 15% oder mehr, jeweils gemessen mittels Röntgendiffraktion mit anschließender Rietveld-Verfeinerung,
iii) eine Ölzahl von weniger als 80 g/100 g, bevorzugt von 50 g/100 g oder weniger, mehr bevorzugt von 48 g/100 g oder weniger, jeweils gemessen nach DIN EN ISO 787-5:1995-10,
iv) eine solare Reflexion über das Gesamtspektrum von mindestens 85% gemessen nach ASTM Standard C 1549-16,
v) eine solare Reflexion im UV-Bereich von mindestens 78%, bevorzugt von 79% oder mehr, jeweils gemessen nach ASTM Standard C 1549-16,
vi) eine Erweichungstemperatur von weniger als 1720 °C, gemessen nach DIN 51730:2007-09,
vii)eine Halbkugeltemperatur von weniger als 1740 °C, gemessen nach DIN 51730:2007-09.

Der erfindungsgemäße Füllstoff kann eine, zwei, drei, vier, fünf, sechs oder sieben der zuvor genannten Eigenschaften i) bis vii) unabhängig voneinander aufweisen.

Ein niedriger Bleigehalt hat den Vorteil, dass der Einsatz der Füllstoffe in Wandbeschichtungszusammensetzungen gesundheitlich unbedenklich ist. Herkömmliches kalziniertes Kaolin weist oft einen Bleigehalt von deutlich mehr als 300 ppmw auf.

Die Ölzahl wurde nach DIN EN ISO 787-5:1995-10 bestimmt. Nach DIN EN ISO 787-5:1995-10 ist die Ölzahl die Menge an Lackleinöl, die unter festgelegten Bedingungen von einer Pigment- oder Füllstoffprobe absorbiert wird. Je höher die Ölzahl der Pigment- oder Füllstoffprobe, desto mehr Bindemittel muss eine Wandbeschichtungszusammensetzung oder Wandfarbe enthalten. Eine niedrige Ölzahl hat daher den Vorteil, dass der Bindemittelbedarf einer Wandbeschichtungszusammensetzung sinkt. Dies verringert die Herstellungskosten der Wandbeschichtungszusammensetzung und ermöglicht die Zugabe weiterer Additive. Zudem wirkt sich eine niedrige Ölzahl positiv auf die Nassabriebbeständigkeit der Wandbeschichtungen aus.

Für einen Füllstoff für Wandbeschichtungszusammensetzungen kann ein hohes solares Reflexionsvermögen über das Gesamtspektrum von Vorteil sein. Wird der Füllstoff für Fassadenfarben verwendet, wird einfallende Sonnenstrahlung reflektiert. Dadurch wird eine Aufheizung der Umgebung vermieden. Damit können sog. *"Urban Heat Islands"* vermieden werden. Zudem werden Gebäude weniger stark durch Sonneneinstrahlung aufgeheizt, so dass Kosteneinsparungen bei der Klimatisierung erreicht werden können. Besonders bevorzugt ist es, wenn der Füllstoff für Wandbeschichtungszusammensetzungen im UV-Bereich ein hohes solares Reflexionsvermögen aufweist. Durch Sonneneinstrahlung im UV-Bereich kann das Bindemittel der Fassadenfarbe angegriffen und zerstört werden. Die Verwendung von Füllstoffen mit einem hohen solaren Reflexionsvermögen im UV-Bereich kann daher zu einer Erhöhung der UV-Stabilität der Wandbeschichtungszusammensetzung führen.

Die solare Reflexion über das Gesamtspektrum und die solare Reflexion im UV-Bereich werden gemäß ASTM Standard C 1549-16 ("standard test method for determination of solar reflection near ambient temperature using a portable solar reflectometer") bestimmt. Als Messgerät kann das "Solar Spectrum Reflektometer" Model SSR der Firma Devices and Services, Dallas, Texas, USA verwendet werden.

Gegenstand der Erfindung ist auch ein Verfahren zur Herstellung eines Füllstoffs für Wandbeschichtungszusammensetzungen, wobei der Füllstoff aus Partikeln besteht, umfassend:
a) Brennen einer Mischung von
   - 40 bis 70 Gew.-% Tonminerale
   - 0 bis 32 Gew.-%, bevorzugt 5 bis 32 Gew.-% kristalline Kieselsäuren
   - 10 bis 45 Gew.-% Feldspat
   - 0 bis 20 Gew.-% sonstige Zuschlagstoffe
b) Brechen der gebrannten Mischung,
c) Mahlen der gebrochenen, gebrannten Mischung zu Partikeln, wobei die Partikel eine d50-Korngröße zwischen 1 µm und 40 µm aufweisen.

Erfindungsgemäß kann das Brennen der Mischung bei Temperaturen von mehr als 1100 °C erfolgen. Die Mischungen können bei Temperaturen von etwa 1200 °C gebrannt werden, während die Kalzinierung von Kaolin etwa bei 1380 °C erfolgt. Dies bringt eine signifikante Energieeinsparung mit sich.

Beim Brechen in Schritt b) des erfindungsgemäßen Verfahrens wird die zu einem Körper verpresste und gebrannte Mischung mit Hilfe geeigneter Brecher zerkleinert.

Anschließend folgt in Schritt c) des erfindungsgemäßen Verfahrens das Mahlen der gebrochenen, gebrannten Mischung zu Partikeln, wobei die Partikel eine d50-Korngröße zwischen 1 µm und 40 µm aufweisen. Das Mahlen erfolgt mittels geeigneter Mühlen. Bevorzugt handelt es sich hierbei um Kugelmühlen, Walzenmühlen, Stiftmühlen, Schwingmühlen oder Luftstrahlmühlen.

Gegenstand der Erfindung ist weiterhin eine Wandbeschichtungszusammensetzung umfassend den erfindungsgemäßen Füllstoff.

Bei der Wandbeschichtungszusammensetzung kann es sich um Häuserputze oder Wandfarben handeln. Bei den Wandfarben handelt es sich bevorzugt um Dispersions-, Kunstharzdispersions-, Acrylat-, Silikat-, Silikon- oder Dispersionsacrylatfarbe, welche sowohl als Innenraum- als auch als Außen- oder Fassadenfarbe verwendet werden kann. Bevorzugt handelt es sich bei der Wandbeschichtungszusammensetzung um eine wässrige Dispersionsfarbe oder eine wässrige Kunstharzdispersionsfarbe.

Bevorzugt ist der Füllstoff in einer Menge zwischen 2 und 25 Gew.-%, mehr bevorzugt zwischen 3 und 20 Gew.-%, noch mehr bevorzugt zwischen 5 und 15 Gew.-%, noch mehr bevorzugt zwischen 8 und 12 Gew.-%, in der Wandbeschichtungszusammensetzung enthalten.

Bevorzugt umfasst die Wandbeschichtungszusammensetzung zusätzlich mindestens ein Bindemittel.

Bevorzugt handelt es sich bei dem mindestens einen Bindemittel um ein organisches Bindemittel, ein silikatisches Bindemittel, oder Mischungen von organischen und silikatischen Bindemitteln. Bevorzugt handelt es sich bei dem organischen Bindemittel um ein Bindemittel ausgewählt aus der Gruppe bestehend aus Polyvinylacetat, Acrylat, Vinylacetat-Ethylen-Copolymeren, Styrol-Acrylat-Copolymeren und Mischungen hiervon. Bevorzugt handelt es sich bei dem silikatischen Bindemittel um ein Bindemittel ausgewählt aus der Gruppe bestehend aus Natronwasserglas, Kaliwasserglas, Lithiumwasserglas und Mischungen hiervon.

Bevorzugt ist das mindestens eine Bindemittel in einer Menge zwischen 8 Gew.-% und 16 Gew.-% in der Wandbeschichtungszusammensetzung enthalten.

Die erfindungsgemäße Wandbeschichtungszusammensetzung kann zudem weitere Additive wie Pigmente, Dispergiermittel, Verdickungsmittel, Pigmentstabilisatoren oder Biozide umfassen. Geeignete Additive sind dem Fachmann bekannt.

Gegenstand der Erfindung ist ferner ein Verfahren zur Herstellung einer Wandbeschichtungszusammensetzung umfassend:
- Mischen des erfindungsgemäßen Füllstoffs mit mindestens einem Bindemittel.

Gegenstand der Erfindung ist auch die Verwendung von Partikeln, die gebrannte Mischungen von
- 40 bis 70 Gew.-% Tonminerale
- 0 bis 32 Gew.-%, bevorzugt 5 bis 32 Gew.-% kristalline Kieselsäuren
- 10 bis 45 Gew.-% Feldspat
- 0 bis 20 Gew.-% sonstige Zuschlagsstoffe
sind und eine d50-Korngröße zwischen 1 µm und 40 µm aufweisen, zur Erhöhung der Nassabriebbeständigkeit von Wandbeschichtungen.

Bei den Partikeln handelt es sich um die erfindungsgemäßen Füllstoffe.

Die Nassabriebbeständigkeit beschreibt die Wasch- bzw. Scheuerbeständigkeit von ausgehärteten oder getrockneten Wandbeschichtungen. Sie ist ein Maß für die Widerstandsfähigkeit einer Wandbeschichtung gegen mechanischen Abrieb, wie er z. B. beim Reinigen einer mit der Wandbeschichtung beschichteten Oberfläche auftreten kann. Die Messung der Nassabriebbeständigkeit erfolgt gemäß DIN EN ISO 11998:2006-10. Als Nassabrieb wird der mittlere Schichtdickenverlust angegeben. Die Nassabriebbeständigkeit kann mit einem Waschabrieb- und Scheuerprüfgerät ermittelt werden, wie es z.B. von der Firma Erichsen GmbH & Co.KG unter der Bezeichnung Model 494 MC kommerziell erhältlich ist.

Überraschenderweise wurde festgestellt, dass mit den erfindungsgemäßen Füllstoffen Wandbeschichtungen mit sehr guten Nassabriebbeständigkeitswerten erhalten werden konnten. Es wird vermutet, dass die niedrige Ölzahl der erfindungsgemäßen Füllstoffe dazu führt, dass die Nassabriebbeständigkeit der die Füllstoffe enthaltenden Wandbeschichtungen erhöht wird.

Gegenstand der Erfindung ist zudem die Verwendung von Partikeln, die gebrannte Mischungen von
- 40 bis 70 Gew.-% Tonminerale
- 0 bis 32 Gew.-%, bevorzugt 5 bis 32 Gew.-% kristalline Kieselsäuren
- 10 bis 45 Gew.-% Feldspat
- 0 bis 20 Gew.-% sonstige Zuschlagsstoffe
sind und eine d50-Korngröße zwischen 1 µm und 40 µm aufweisen, in Wandbeschichtungszusammensetzungen zur Verringerung der in den Wandbeschichtungszusammensetzungen verwendeten Bindemittelmenge.

Bei den Partikeln handelt es sich um die erfindungsgemäßen Füllstoffe.

Überraschenderweise wurde festgestellt, dass die Verwendung der erfindungsgemäßen Füllstoffe in Wandbeschichtungszusammensetzungen dazu führt, dass die in der Wandbeschichtungszusammensetzung verwendete Bindemittelmenge reduziert werden kann. Das liegt daran, dass die Füllstoffe eine niedrige Ölzahl aufweisen.

Die Erfindung wird durch die nachfolgenden Beispiele näher erläutert:

### Beispiel 1: Herstellung von Füllstoffen

Es wurden Artikel der folgenden Zusammensetzung durch Brennen in oxidierender Atmosphäre bei 1200 °C hergestellt:
- 60 Gew.-% Kaolin
- 21 Gew.-% Quarz
- 19 Gew.-% Feldspat

Diese Artikel wurden anschließend auf eine d50-Korngröße von ungefähr 1 mm gebrochen.

Anschließend wurden die gebrochenen Artikel gemahlen. Es wurden folgende d50-Korngrößen erhalten:

| **Probe 1** | **Probe 2** | **Probe 3** |
|---|---|---|
| 3,3 µm | 5,4 µm | 11,8 µm |

Als Vergleichsprobe wurde in den Beispielen 2, 3, 4, 7 und 8 kommerziell erhältliches kalziniertes Kaolin (DORKAFILL^{®} H, Gebrüder Dorfner GmbH & Co. Kaolin- und Kristallquarzsandwerke KG, Hirschau) verwendet. Dieses wies eine d50-Korngröße, gemessen mit CILAS-Lasergranulometer, von 11,6 µm auf. Es hat einen Mullit-Index von 45.

### Beispiel 2: Ölzahl

Die Ölzahl der Proben wurde nach DIN EN ISO 787-5:1995-10 bestimmt. Es wurden folgende Ölzahlen gemessen:

| **Probe 1** | **Probe 2** | **Probe 3** | **Vergleichsprobe** |
|---|---|---|---|
| 47 g/100 g | 41 g/100 g | 35 g/100 g | 80 g/100g |

Die erfindungsgemäßen Proben 1 bis 3 wiesen wesentlich geringere Ölzahlen auf als die Vergleichsprobe. Wandbeschichtungszusammensetzungen, die mit den Proben 1 bis 3 hergestellt wurden, hatten daher einen geringeren Bindemittelbedarf als Wandbeschichtungszusammensetzungen, in denen das kalzinierte Kaolin A verwendet wurde.

### Beispiel 3: Bleigehalt

Der Bleigehalt der Proben wurde mittels Röntgenfluoreszenzanalyse nach DIN 51001:2003-08 bestimmt. Es wurden folgende Bleigehalte gemessen:

| **Probe 1** | **Probe 2** | **Probe 3** | **Vergleichsprobe** |
|---|---|---|---|
| < 150 ppmw | < 150 ppmw | < 150 ppmw | 1.200 ppmw |

Auf Grund der niedrigen Bleigehalte sind die erfindungsgemäßen Füllstoffe (Proben 1 bis 3) gesundheitlich unbedenklich. Im Gegensatz zu der Vergleichsprobe ist ein Einsatz der erfindungsgemäßen Füllstoffe in Wandbeschichtungen problemlos möglich.

### Beispiel 4: Solare Reflexion

Mittels eines "Solar Spectrum Reflektometers" Model SSR der Firma Devices and Services, Dallas, Texas, USA wurde die totale solare Reflexion für einen Einfallswinkel von 20 ° gegen die Senkrechte gemessen. Hierzu wurde eine repräsentative und ausreichend große Teilmenge der zu messenden Probe entnommen. Eine Probenschale mit einem Durchmesser von 55 mm wurde 10 mm hoch mit der Probe befüllt, die Oberfläche wurde mit einem Spatel geglättet. Der solare Reflexionswert wird als Mittelwert von fünf Messungen angegeben. Es wurden die solare Reflexion über das Gesamtspektrum und die solare Reflexion im UV-Bereich (UV-Reflexion) bestimmt. Die Partikel wiesen folgende Eigenschaften auf:

| | **Probe 1** | **Probe 2** | **Probe 3** | **Vergleichsprobe** |
|---|---|---|---|---|
| **Solare Reflexion (Gesamtspektrum)** | 92,5% | 91,4% | 91,9% | 92,5% |
| **UV-Reflexion** | 83,1% | 81,0% | 79,5% | 77,2% |

Die erfindungsgemäßen Füllstoffe (Proben 1 bis 3) wiesen eine im Vergleich zur Vergleichsprobe erhöhte solare Reflexion im energiereichen UV-Bereich auf. Fassadenfarben, in denen die erfindungsgemäßen Füllstoffe verwendet werden, können einfallende Sonnenstrahlung im UV-Bereich sehr gut reflektieren.

### Beispiel 5: Erweichungs- und Halbkugeltemperatur

Es wurde das Aufschmelzverhalten der Proben im Erhitzungsmikroskop untersucht. Dabei wird gemäß DIN 51730:2007-09 ein zu einem Würfel geformter Probekörper erhitzt und seine Verformung durch ein bildgebendes Verfahren aufgezeichnet. Dabei können charakteristische Punkte (Erweichungstemperatur, Halbkugeltemperatur, Fließtemperatur) beschrieben werden. Es wurde ein Erhitzungsmikroskop von Linseis verwendet. Die Proben wiesen folgende Eigenschaften auf:

| | **Probe 1, 2 und 3** | **Vergleichsprobe*** |
|---|---|---|
| **Erweichungstemperatur** | 1695 °C | 1737 °C |
| **Halbkugeltemperatur** | 1720 °C | > 1740 °C |
| **Fließtemperatur** | > 1740 °C | > 1740 °C |

| | | |
|---|---|---|
| *kalziniertes Kaolin (AS 45 der Firma Amberger Kaolinwerke Eduard Kick GmbH & Co.KG) | | |

### Beispiel 6: Amorpher Anteil

Der amorphe Anteil der Proben wurde durch Röntgendiffraktion mit anschließender Rietveld-Verfeinerung ermittelt. Hierzu wurden die Proben fein aufgemahlen und anschließend Aufnahmen mit einem Röntgendiffraktometer (Malvern-Panalytical EMPYREAN) angefertigt. Daraus wurde der Mineralbestand bestimmt. In einem weiteren Schritt wurden zu jeder Probe 10 Gew.-% Rutil zugefügt, um über eine Rietveld-Analyse neben den kristallinen Bestandteilen auch den amorphen Anteil jeder Probe zu bestimmen. Die Proben wiesen folgenden amorphen Anteil auf:

| **Probe 1, 2 und 3** | **Vergleichsprobe*** |
|---|---|
| 16% | 9% |

| | |
|---|---|
| *kalziniertes Kaolin (AS 45 der Firma Amberger Kaolinwerke Eduard Kick GmbH & Co.KG) | |

### Beispiel 7: Wandbeschichtungszusammensetzung

Es wurde eine wässrige Dispersionsfarbe mit einer Pigmentvolumenkonzentration von 80% erstellt. Sie hatte die folgende Zusammensetzung:

| **Bestandteil** | **Gew.-%** |
|---|---|
| Wasser | 30,1 |
| Calgon N | 0,05 |
| BYK 155/35 | 0,9 |
| BYK 014 | 0,2 |
| Acticide MBS | 0,1 |
| Walocell XM 6000 PV | 0,5 |
| Walocel XM 30.000 PV | 0,1 |
| Kronos 2300 | 10 |
| CaCO3 Omyacarb 2 | 38 |
| Probe 1, 2, 3 oder Vergleichsprobe | 10 |
| Mowilith LDM 1871 | 10 |
| BYK 014 | 0,2 |
| Acrysol RM 8 W | 0,1 |
| Summe | 100,0 |

### Beispiel 8: Nassabriebbeständigkeit

Zur Bestimmung der Nassabriebbeständigkeit der Wandbeschichtung wurden die entlüfteten, streichfähigen Farben aus Beispiel 7 (enthaltend als Füllstoff entweder eine der Proben 1, 2 oder 3 oder kommerziell erhältliches kalziniertes Kaolin (DORKAFILL^{®} H, Gebrüder Dorfner GmbH & Co. Kaolin- und Kristallquarzsandwerke KG, Hirschau)) mit einem Filmziehgerät (Fabrikat Zehntner, Typ ZAA 2300) unter Verwendung eines Rakels mit einer Filmdicke von 200 µm auf eine schwarz-weiße Lackkarte (Firma Erichsen GmbH & Co.KG) aufgetragen. Nach dem Aufrakeln wurden diese gemäß Norm DIN EN ISO 11998:2006-10 über zwei Wochen getrocknet. Die Messung der Nassabriebbeständigkeit erfolgte gemäß DIN EN ISO 11998:2006-10, bei der die zu prüfende Fläche mit einer definierten Anzahl Hüben belastet wird. Als Nassabrieb wird der mittlere Schichtdickenverlust angegeben. Die Nassabriebbeständigkeit wurde mit einem Waschabrieb- und Scheuerprüfgerät Model 494 MC der Firma Erichsen GmbH & Co.KG ermittelt. Es wurden folgende Werte für den Nassabrieb ermittelt:

| **Probe 1** | **Probe 2** | **Probe 3** | **Vergleichsprobe** |
|---|---|---|---|
| 45,3 µm | 30,8 µm | 14,9 µm | 32,1 µm |

Die erfindungsgemäßen Füllstoffe (Proben 1 bis 3) ermöglichten die Herstellung von Wandfarben mit sehr guten Nassabriebbeständigkeitswerten. Exzellente Werte konnten mit Partikeln der Proben 2 und 3 erzielt werden.

## Patentansprüche

1. Füllstoff für Wandbeschichtungszusammensetzungen, wobei der Füllstoff aus Partikeln besteht, wobei die Partikel gebrannte Mischungen von
- 40 bis 70 Gew.-% Tonminerale
- 5 bis 32 Gew.-% kristalline Kieselsäuren
- 10 bis 45 Gew.-% Feldspat
- 0 bis 20 Gew.-% sonstige Zuschlagsstoffe
sind und wobei die Partikel eine d50-Korngröße zwischen 1 µm und 40 µm aufweisen.

2. Füllstoff gemäß Anspruch 1, wobei die Partikel gebrannte Mischungen von
- 40 bis 70 Gew.-% Tonminerale
- 5 bis 30 Gew.-% kristalline Kieselsäuren
- 10 bis 30 Gew.-% Feldspat
- 0 bis 20 Gew.-% sonstige Zuschlagsstoffe
sind.

3. Füllstoff gemäß Anspruch 1 oder 2, wobei die Partikel eine d50-Korngröße zwischen 3 µm und 40 µm, bevorzugt zwischen 3 µm und 30 µm, mehr bevorzugt zwischen 3 µm und 25 µm, aufweisen.

4. Füllstoff gemäß einem der Ansprüche 1 bis 3, wobei die Tonminerale ausgewählt sind aus der Gruppe bestehend aus Kaolin, Dickit, Nacrit, Halloysit, Vermicullit und Mischungen davon.

5. Füllstoff gemäß einem der Ansprüche 1 bis 4, wobei die kristallinen Kieselsäuren ausgewählt sind aus der Gruppe bestehend aus Quarz, Cristobalit, Tridymit und Mischungen davon.

6. Füllstoff gemäß einem der Ansprüche 1 bis 5, wobei die sonstigen Zuschlagsstoffe ausgewählt sind aus der Gruppe bestehend aus Tonerde (Al₂O₃), Gerüstsilikaten, die keine Feldspate sind, Schichtsilikaten, die keine Tonminerale sind, Silikaten, die keine Gerüst- oder Schichtsilikate sind, Carbonaten und Mischungen davon.

7. Füllstoff gemäß einem der Ansprüche 1 bis 6, wobei der Füllstoff einen Bleigehalt von weniger als 300 ppmw, bevorzugt weniger als 200 ppmw, jeweils gemessen mittels Röntgenfluoreszenzanalyse nach DIN 51001:2003-08, und/oder einen amorphen Anteil von mehr als 10%, gemessen mittels Röntgendiffraktion mit anschließender Rietveld-Verfeinerung, aufweist.

8. Füllstoff gemäß einem der Ansprüche 1 bis 7, wobei der Füllstoff eine Ölzahl von weniger als 80 g/100 g, bevorzugt von 50 g/100 g oder weniger, jeweils gemessen nach DIN EN ISO 787-5:1995-10, und/oder eine solare Reflexion über das Gesamtspektrum von mindestens 85%, gemessen nach ASTM Standard C 1549-16, aufweist.

9. Füllstoff gemäß einem der Ansprüche 1 bis 8, wobei der Füllstoff eine Erweichungstemperatur von weniger als 1720 °C, gemessen nach DIN 51730:2007-09, und/oder eine Halbkugeltemperatur von weniger als 1740 °C, gemessen nach DIN 51730:2007-09, aufweist.

10. Wandbeschichtungszusammensetzung umfassend den Füllstoff nach einem der Ansprüche 1 bis 9, bevorzugt zusätzlich umfassend mindestens ein Bindemittel.

11. Wandbeschichtungszusammensetzung gemäß Anspruch 10, wobei der Füllstoff in einer Menge zwischen 2 und 25 Gew.-% enthalten ist.

12. Verfahren zur Herstellung eines Füllstoffs für Wandbeschichtungszusammensetzungen, wobei der Füllstoff aus Partikeln besteht, umfassend:
a) Brennen einer Mischung von
- 40 bis 70 Gew.-% Tonminerale
- 5 bis 32 Gew.-% kristalline Kieselsäuren
- 10 bis 45 Gew.-% Feldspat
- 0 bis 20 Gew.-% sonstige Zuschlagsstoffe
b) Brechen der gebrannten Mischung,
c) Mahlen der gebrochenen, gebrannten Mischung zu Partikeln, wobei die Partikel eine d50-Korngröße zwischen 1 µm und 40 µm aufweisen.

13. Verfahren zur Herstellung einer Wandbeschichtungszusammensetzung umfassend:
- Mischen des Füllstoffs nach einem der Ansprüche 1 bis 8 mit mindestens einem Bindemittel.

14. Verwendung von Partikeln, die gebrannte Mischungen von
- 40 bis 70 Gew.-% Tonminerale
- 5 bis 32 Gew.-% kristalline Kieselsäuren
- 10 bis 45 Gew.-% Feldspat
- 0 bis 20 Gew.-% sonstige Zuschlagsstoffe
sind und eine d50-Korngröße zwischen 1 µm und 40-µm aufweisen, zur Erhöhung der Nassabriebbeständigkeit von Wandbeschichtungen.

15. Verwendung von Partikeln, die gebrannte Mischungen von
- 40 bis 70 Gew.-% Tonminerale
- 5 bis 32 Gew.-% kristalline Kieselsäuren
- 10 bis 45 Gew.-% Feldspat
- 0 bis 20 Gew.-% sonstige Zuschlagsstoffe
sind und eine d50-Korngröße zwischen 1 µm und 40 µm aufweisen, in Wandbeschichtungszusammensetzungen zur Verringerung der in den Wandbeschichtungszusammensetzungen verwendeten Bindemittelmenge.

## Claims

1. A filler for wall coating compositions, wherein said filler consists of particles, wherein said particles are fired mixtures of
- 40 to 70% by weight of clay minerals
- 5 to 32% by weight of crystalline silicic acids
- 10 to 45% by weight of feldspar
- 0 to 20% by weight of other aggregates,
and wherein said particles have a d50 grain size of from 1 µm to 40 µm.

2. The filler according to claim 1, wherein said particles are fired mixtures of
- 40 to 70% by weight of clay minerals
- 5 to 30% by weight of crystalline silicic acids
- 10 to 30% by weight of feldspar
- 0 to 20% by weight of other aggregates.

3. The filler according to claim 1 or 2, wherein the particles have a d50 grain size of from 3 µm to 40 µm, preferably from 3 µm to 30 µm, more preferably from 3 µm to 25 µm.

4. The filler according to any of claims 1 to 3, wherein said clay minerals are selected from the group consisting of china clay, dickite, nacrite, halloysite, vermiculite, and mixtures thereof.

5. The filler according to any of claims 1 to 4, wherein the crystalline silicic acids are selected from the group consisting of quartz, cristobalite, tridymite, and mixtures thereof.

6. The filler according to any of claims 1 to 5, wherein the other aggregates are selected from the group consisting of alumina (Al₂O₃), tectosilicates that are not feldspars, phyllosilicates that are not clay minerals, silicates that are not tecto- or phyllosilicates, carbonates, and mixtures thereof.

7. The filler according to any of claims 1 to 6, wherein said filler has a lead content of less than 300 ppmw, preferably less than 200 ppmw, respectively measured by means of X-ray fluorescence analysis according to DIN 51001:2003-08, and/or an amorphous fraction of more than 10%, as measured by means of X-ray diffraction followed by Rietveld refinement.

8. The filler according to any of claims 1 to 7, wherein said filler has an oil number of less than 80 g/100 g, preferably 50 g/100 g or less, respectively measured according to DIN EN ISO 787-5:1995-10, and/or a solar reflection across the total spectrum of at least 85%, measured according to ASTM Standard C 1549-16.

9. The filler according to any of claims 1 to 8, wherein said filler has a softening temperature of less than 1720°C, measured according to DIN 51730:2007-09, and/or a hemisphere temperature of less than 1740°C, measured according to DIN 51730:2007-09.

10. A wall coating composition, comprising the filler according to any of claims 1 to 9, preferably further comprising at least one binder.

11. The wall coating composition according to claim 10, wherein said filler is contained therein in an amount of from 2 to 25% by weight.

12. A process for producing a filler for wall coating compositions, wherein said filler consists of particles, comprising:
a) firing a mixture of
- 40 to 70% by weight of clay minerals
- 5 to 32% by weight of crystalline silicic acids
- 10 to 45% by weight of feldspar
- 0 to 20% by weight of other aggregates;
b) crushing the fired mixture,
c) grinding the crushed fired mixture to particles, wherein said particles have a d50 grain size of from 1 µm to 40 µm.

13. A process for producing a wall coating composition, comprising:
- mixing the filler according to any of claims 1 to 8 with at least one binder.

14. Use of particles that are fired mixtures of
- 40 to 70% by weight of clay minerals
- 5 to 32% by weight of crystalline silicic acids
- 10 to 45% by weight of feldspar
- 0 to 20% by weight of other aggregates,
and have a d50 grain size of from 1 µm to 40 µm, to increase the wet abrasion resistance of wall coatings.

15. Use of particles that are fired mixtures of
- 40 to 70% by weight of clay minerals
- 5 to 32% by weight of crystalline silicic acids
- 10 to 45% by weight of feldspar
- 0 to 20% by weight of other aggregates,
and have a d50 grain size of from 1 µm to 40 µm, in wall coating compositions for reducing the amount of binder used in wall coating compositions.

## Revendications

1. Charge pour des compositions de revêtement mural, dans laquelle la charge est constituée de particules, dans laquelle les particules sont des mélanges cuits de
- 40 à 70 % en poids de minéraux argileux
- 5 à 32 % en poids de silice cristalline
- 10 à 45 % en poids de feldspath
- 0 à 20 % en poids d'autres agrégats
et dans laquelle les particules présentent une taille de grains d50 comprise entre 1 µm et 40 µm.

2. Charge selon la revendication 1, dans laquelle les particules sont des mélanges cuits de
- 40 à 70 % en poids de minéraux argileux
- 5 à 30 % en poids de silice cristalline
- 10 à 30 % en poids de feldspath
- 0 à 20 % en poids d'autres agrégats.

3. Charge selon la revendication 1 ou 2, dans laquelle les particules présentent une taille de grains d50 comprise entre 3 µm et 40 µm, de préférence entre 3 µm et 30 µm, plus préférablement entre 3 µm et 25 µm.

4. Charge selon l'une des revendications 1 à 3, dans laquelle les minéraux argileux sont choisis dans le groupe constitué de kaolin, dickite, nacrite, halloysite, vermiculite et leurs mélanges.

5. Charge selon l'une des revendications 1 à 4, dans laquelle les silices cristallines sont choisies dans le groupe constitué de quartz, cristobalite, tridymite et leurs mélanges.

6. Charge selon l'une des revendications 1 à 5, dans laquelle les autres agrégats sont choisis dans le groupe constitué d'alumine (Al₂O₃), tectosilicates autres que les feldspaths, phyllosilicates autres que les minéraux argileux, silicates autres que les tectosilicates ou les phyllosilicates, carbonates et leurs mélanges.

7. Charge selon l'une des revendications 1 à 6, dans laquelle la charge présente une teneur en plomb inférieure à 300 ppmp, de préférence inférieure à 200 ppmp, respectivement mesurée par analyse de fluorescence X selon la norme DIN 51001:2003-08, et/ou une fraction amorphe supérieure à 10 %, mesurée par diffraction des rayons X suivie d'un affinage de Rietveld.

8. Charge selon l'une des revendications 1 à 7, dans laquelle la charge présente un indice d'huile inférieur à 80 g/100 g, de préférence de 50 g/100 g ou moins, respectivement mesuré selon la norme DIN EN ISO 787-5:1995-10, et/ou une réflectance solaire sur le spectre total d'au moins 85 %, mesurée selon la norme ASTM C 1549-16.

9. Charge selon l'une des revendications 1 à 8, dans laquelle la charge présente une température de ramollissement inférieure à 1720 °C, mesurée selon la norme DIN 51730:2007-09, et/ou une température hémisphérique inférieure à 1740 °C, mesurée selon la norme DIN 51730:2007-09.

10. Composition de revêtement mural comprenant la charge selon l'une des revendications 1 à 9, de préférence comprenant en outre au moins un liant.

11. Composition de revêtement mural selon la revendication 10, dans laquelle la charge est contenue en une quantité comprise entre 2 et 25 % en poids.

12. Procédé pour la fabrication d'une charge pour des compositions de revêtement mural, dans lequel la charge est constituée de particules, comprenant :
a) la cuisson d'un mélange de
- 40 à 70 % en poids de minéraux argileux
- 5 à 32 % en poids de silice cristalline
- 10 à 45 % en poids de feldspath
- 0 à 20 % en poids d'autres agrégats
b) le concassage du mélange cuit,
c) le broyage du mélange cuit et concassé en particules, dans lequel les particules présentent une taille de grains d50 comprise entre 1 µm et 40 µm.

13. Procédé pour la fabrication d'une composition de revêtement mural comprenant :
- le mélange de la charge selon l'une des revendications 1 à 8 avec au moins un liant.

14. Utilisation de particules qui sont des mélanges cuits de
- 40 à 70 % en poids de minéraux argileux
- 5 à 32 % en poids de silice cristalline
- 10 à 45 % en poids de feldspath
- 0 à 20 % en poids d'autres agrégats
et qui présentent une taille de grains d50 comprise entre 1 µm et 40 µm, pour augmenter la résistance à l'abrasion humide de revêtements muraux.

15. Utilisation de particules qui sont des mélanges cuits de
- 40 à 70 % en poids de minéraux argileux
- 5 à 32 % en poids de silice cristalline
- 10 à 45 % en poids de feldspath
- 0 à 20 % en poids d'autres agrégats
et qui présentent une taille de grains d50 comprise entre 1 µm et 40 µm, dans des compositions de revêtement mural pour réduire la quantité de liant utilisée dans les compositions de revêtement mural.
